# EUROPEAN PATENT SPECIFICATION

(11) **EP 2 737 361 B1**
(45) Date of publication and mention of the grant of the patent: **16.09.2015**
(21) Application number: 12759185.7
(22) Date of filing: 30.07.2012
(51) Int. Cl.: G02C 1/08, G02C 13/00

(54) **FRAME ASSEMBLY FOR SPECTACLES, CORRESPONDING FRAMES, ASSEMBLING AND DISASSEMBLING METHOD FOR SAID FRAMES AND ASSEMBLING AND DISASSEMBLING TOOL**
SYSTEM FÜR DEN ZUSAMMENBAU VON BRILLENFASSUNGEN, ENTSPRECHENDE BRILLENFASSUNGEN, MONTAGE- UND DEMONTAGEVERFAHREN DER BRILLENFASSUNGEN SOWIE MONTAGE- UND DEMONTAGEWERKZEUG
KIT POUR L'ASSEMBLAGE DES MONTURES DESTINÉES À DES LUNETTES, MONTURES CORRESPONDANTES, PROCÉDÉ D'ASSEMBLAGE ET DE DÉSASSEMBLAGE DESDITES MONTURES ET OUTIL D'ASSEMBLAGE ET DE DÉSASSEMBLAGE

(30) Priority: 29.07.2011 IT UD20110119
(43) Date of publication of application: 04.06.2014
(73) Proprietor: Som Occhiali S.r.l., 32042 Calalzo di Cadore (IT)
(72) Inventor: SOMMAVILLA, Giovanni, I-32042 Calalzo Di Cadore (IT)
(74) Representative: Petraz, Gilberto Luigi
(86) International application number: PCT/IB2012/001462
(87) International publication number: WO 2013/017933

(56) References cited:
- EP-A1- 1 460 470
- WO-A1-2005/116726
- DE-U1-202010 013 199
- US-A- 5 940 164
- US-B1- 6 227 666

## Description

### FIELD OF THE INVENTION

The present invention concerns a frame assembly for spectacles in which the assembling/disassembling of the different components, for example lenses and arms, is facilitated irrespective of the shape and characteristics of the components themselves.

The invention also allows to personalize and enhance the frames quickly and easily by means of quick and effortless operations.

The invention also concerns the connected assembling and disassembling method for said frames, and the tool, or key, which is used to carry out the assembling and disassembling operations.

### BACKGROUND OF THE INVENTION

Various types of frames for spectacles are known, having different shapes and characteristics.

Generally the frames comprise a front-piece which defines the seatings for the lenses, one or more intermediate nose pads, and two arms hinged at the sides of the front-piece.

Normally, in order to attach the lenses small screws are provided which, for assembly and disassembly, require specialized personnel and complex operations, which may take a long time and need experience and capability.

It can happen that the screws loosen more and more frequently during use, and can also be lost, which causes considerable inconvenience and waste of time for the user in order to carry out the reassembling.

From the documents EP-A1-1.460.470, WO-A1-2005/116726, WO-A1-2005/111697, EP-A2-833.185 and DE-U1-202010013199 solutions in various configurations are known in which the arm can be attached to the ends of the front-piece by interposing an assembly element, which can also be attached elastically.

However, such solutions generally involve problems of gripping during the coupling time, complex assembling and disassembling, difficulties in carrying out the disassembling of the components, for example in order to replace the lenses, with the consequent need to call on specialized personnel.

Main purpose of the present invention is to facilitate and speed up the assembling and the replacement of components of the frames.

Another purpose of the present invention is to make frames for spectacles in which attachment means between arms and front-piece allow quick and simple assembling and disassembling operations. A relevant document in this regard is US5517723, which shows a pin that can be inserted in the bore of a hinge by means of a tool with an easy breaking zone between the handle part of the tool and the pin.

A further purpose is to make frames for spectacles in which the attachment means keep their functionality, and in particular their stable hold over time, even after repeated assembling and disassembling operations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a frame assembly for spectacles according to the present invention comprises, as essential parts, frames and an assembling/disassembling tool.

The frames also comprise a front-piece, arms hinged at the opposite ends of the front-piece, and a mechanism which connects each arm to the corresponding end of the front-piece.

The frames also comprise a tubular bushing selectively attachable in snap-in manner with the corresponding end of the front-piece, and selectively removable from it.

The tubular bushing is attachable/detachable in snap-in manner to/from a pair of fins made at the ends of the front-piece, in particular obtained as end parts of the rims containing the lenses; the fins are separated by an intermediate space which renders the rim elastic and, when the bushing is removed, allows to widen the rim and remove the corresponding lens.

The inverse operation is equally quick and easy, after having substituted the lens, re-attaching the bushing to the fins in snap-in manner.

In a preferential solution, the attachment fins also have terminal teeth facing in opposite directions with respect to each other, which in an assembled position of the bushing are anchored in respective seatings provided inside the tubular bushing itself.

According to the invention, the frame assembly also comprises an assembling/disassembling tool, which is provided with a handle on one side of which an appendix or push rod is made, which breaks easily.

In a preferred solution, the push rod is made as a terminal part, by means of an easy breaking zone, of a spacer element, removably mounted on said handle and which can be substituted after the operation to apply the push rod has been carried out.

The push rod is directly connected to the handle by means of an easy breaking zone.

In the assembly step, after having positioned and attached the bushing to the elastic fins of the front-piece, the spacer element of the tool is inserted between the elastic fins, after which the handle is bent, thus determining the breakage of the push rod which remains in position between the elastic fins.

The presence of the push rod between the elastic fins, preventing them from approaching each other, makes it impossible to remove the bushing, and therefore the arm, with respect to the front-piece, thus making the assembly hold stable even over time.

In another form of embodiment, associated to the handle in a different position with respect to the appendix/push rod, the tool has a blade or wedge element which has the function, in the disassembling step, of removing the push rod from its position between the attachment teeth.

In this way, using the tool in an appropriate manner, it is possible for a specialized person such as an optician, or even the final user, to carry out quickly and easily the definitive assembly of the frames, and the disassembly too, in order, for example, to substitute the lenses or other parts of the spectacles.

The advantages of the present invention are considerable and numerous.

The presence of the elastic fins and the retaining teeth made at the ends of the front-piece renders the rim which contains the lenses elastic, facilitating and accelerating the removal, substitution and re-assembly thereof, once the bushing has been removed from them.

Moreover, by providing a part of the hinge on an element which is easily and rapidly removable from the front-piece it is possible to rapidly substitute parts of the spectacles, for example the lenses, or even the arms, without problems and without the need to go to a specialized center.

The tubular bushing can be substituted by others of a different color and, partly, of a different shape, with engravings, writing or logos for example, so as to easily and rapidly personalize the spectacles.

In the production step, the assembly is facilitated because the tubular bushing can be assembled first on the arm, coupling the corresponding male and female parts of the hinge with each other, and then assembling everything in snap-in manner on the front-piece; or the bushing can be first coupled in snap-in manner on the front-piece, and then everything can be assembled on the arm, coupling the parts of the hinge to each other.

The use of the same tool which incorporates both the element which renders the assembly definitive and stable and also the element which allows the disassembling thereof, renders the frame assembly according to the invention extremely functional and economical.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a perspective view of a pair of spectacles comprising frames according to the present invention;
- fig. 2 shows a perspective view of the connection zone between the front-piece and the arm;
- fig 3 shows a lateral view of the tubular bushing used in the frames of fig. 1;
- fig 4 shows a tool used for assembling/disassembling the frames for spectacles according to the invention;
- fig. 5 shows a plan view of the arm associated to the bushing;
- fig. 6 shows an enlarged detail of fig. 5;
- figs. 7a, 7b, 7c, 7d, 7e are a schematic representation of a sequence of steps for assembling some components of the frames for spectacles according to the invention;
- figs. 8a, 8b, 8c, 8d, 8e are a schematic representation of a sequence of steps for disassembling some components of the frame for spectacles according to the invention.

### DETAILED DESCRIPTION OF A PREFERENTIAL FORM OF EMBODIMENT

With reference to the attached drawings, frames 10 for spectacles according to the present invention are applied to a pair of spectacles 12.

The frames 10 comprise a pair of arms 13 hinged to a front-piece 14 by means of a hinge 11. The front-piece 14 has rims 19 which define the positioning seatings for the lenses 18. The rims 19 can be of the type with a lens-housing channel 18, or the rimmed type, or any other type suitable to the purpose.

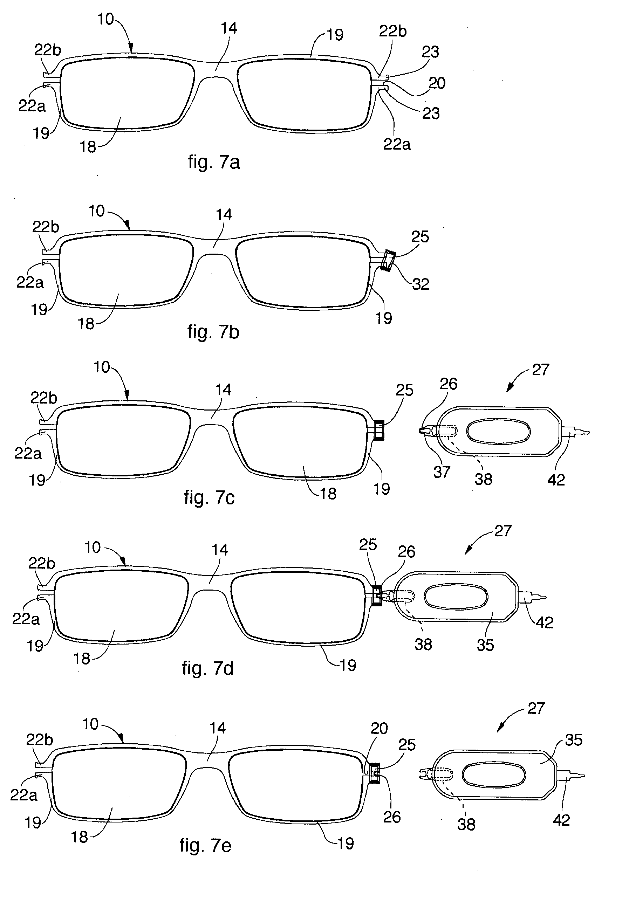

The rims 19 (fig. 7a) end with a pair of attachment fins, respectively upper 22b and lower 22a, separated by an intermediate space 20 which creates the desired elasticity. At the ends of the attachment fins 22a and 22b retaining teeth 23 are provided respectively facing upward and downward, for the purposes explained hereafter.

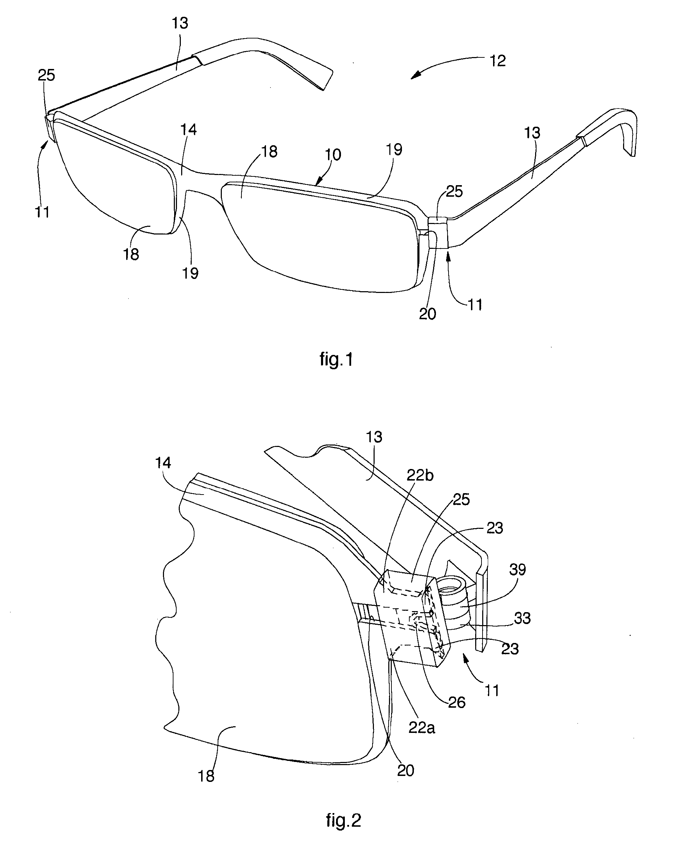

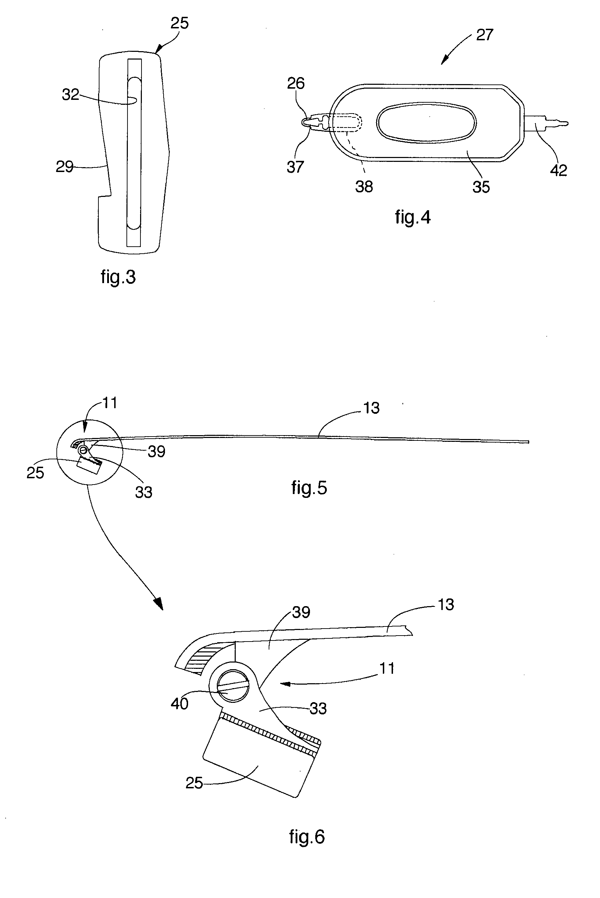

The frames 10 also comprise a tubular bushing 25 (figs. 2 and 3), of a roughly rectangular conformation, and provided with a through cavity 32 to house the attachment fins 22a and 22b made in the rims 19 of the front-piece 14. In this way, the tubular bushing 25 can be attached in snap-in manner on the front-piece 14, inserting the fins 22a, 22b inside the cavity 32. By exploiting the elasticity of the rim 19 determined by the intermediate space 20, the retaining teeth 23 are attached in snap-in manner inside the cavity 32. The bushing 25 thus also performs the function of closing the front-piece 14, clamping the corresponding lens 18 inside the rim 19.

In the case shown in the drawings, merely by way of a non-restrictive example, the bushing 25 has a recessed zone 29, or milling (fig. 3), to assemble a first part 33 of the hinge 11.

As we said, this solution does not limit the field of protection of the present invention, which also provides that the bushing 25 does not have part of the hinge 11, but that the hinge 11 is a separate component and attached to the front-piece 14 in the known manner and at a different point with respect to the positioning of the bushing 25.

The first part 33 of the hinge 11 is for example, and in this case, welded in correspondence to the recessed zone 29 and achieves the connection with the arm 13 which, in its turn, has a second part 39 of the hinging means. As can be seen in figs. 5 and 6, the two parts 33 and 39 of the hinge can be joined using a screw 40 (not shown in fig. 2), in the known manner, to create the desired articulation.

The bushing 25 allows to create the hinged coupling before the arm 13 is coupled with the front-piece 14. Then, once the bushing 25 is assembled on the arm 13, the whole can be attached in snap-in manner on the front-piece 14 by inserting the attachment fins 22a, 22b inside the cavity 32 of the bushing 25, and anchoring the retaining teeth 23 inside, as can be seen in figs. 7b and 7c.

It can be understood from the above how the presence of the bushing 25, attachable in snap-in manner to the front-piece 14, allows to carry out the disassembling/reassembling of the lenses 18 extremely quickly and easily, simply removing the bushing 25 and elastically widening the attachment fins 22a, 22b.

To render the coupling between the bushing 25 and the front-piece 14 stable, and to prevent them from accidentally coming apart, the invention provides a tool 27, having a handle part 35 and a spacer element 38 which at the end has a push rod 26 connected to the spacer element 38 by an easy breaking zone 37.

The spacer element 38 is inserted inside a suitable cavity made on the perimeter of the handle part 35 so as to act as a replaceable element in subsequent assembling and disassembling steps of the frames 10.

Once the attachment fins 22a, 22b have been inserted inside the cavity 32 of the bushing 25, so that the two retaining teeth 23 attach laterally on opposite sides of the bushing 25 (fig. 7c), the tool 27, with its spacer element 38, is inserted through the cavity 32 and between the retaining teeth 23, so that the push rod 26 keeps the retaining teeth 23 spread apart. In a preferential solution, when the correct position is reached, this is determined by a small click which signals the end-of-travel position.

Then, by bending the handle part 35, the push rod 26 is broken and separated from the spacer element 38; the latter remains in position inside the handle part 35, while the push rod 26 remains between the fins 22 (figs. 2 and 7d), preventing the possible uncoupling of the bushing 25 from the front-piece 14.

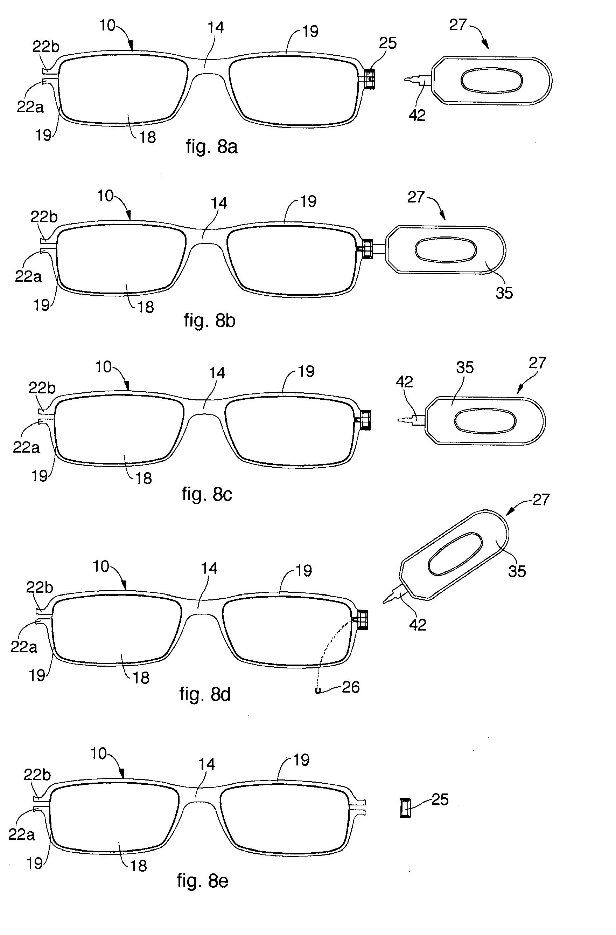

For a subsequent and possible uncoupling of the bushing 25 from the front-piece 14, the invention provides that the tool 27 is equipped with a blade element 42 in a single body, in this case on the side of the handle part 35 opposite the one where the push rod 26 is; the blade element 42 can be used, as seen in the sequence of figs. 8a-8e, to remove and expel the push rod 26 from its position between the attachment fins 22a, 22b.

In particular, the disassembling sequence provides to position the tool 27 (fig. 8a) and then to insert the blade element 42 between the fins 22a, 22b, thrusting the push rod 26 forward (fig. 8b). Then the tool 27 is extracted (fig. 8c) and the push rod 26 is removed (fig. 8d), thus rendering the bushing 25 free to be removed from the front-piece 14.

It is clear that modifications and/or additions of parts may be made to the device for spectacles as described heretofore, without departing from the field and scope of the present invention.

For example, even if a solution with a part of the hinge welded to the bushing 25 has been represented, it also comes within the field of the invention to provide a solution in which the bushing 25 with snap-in attachment can be attached to a metal sheet, a wire or other similar or comparable element, which has the hinge part to be coupled with the other hinge part present on the arm 13.

## Claims

1. Frame assembly for spectacles comprising frames and an assembling/ disassembling tool, wherein said frames (10) comprise a front-piece (14), arms (13) hinged to the opposite ends of the front-piece (14) and a tubular bushing (25) associable in snap-in manner with the corresponding end of the front-piece (14), and able to be removed from it, **characterized in that** said assembling/disassembling tool (27) comprises a handle part (35) and a push rod part (26) connected to the handle part (35) by means of an easy breaking zone (37), wherein said push rod part (26) is removable from said handle part (35) in order to be inserted and positioned in said end of the front-piece (14) and render the coupling of said tubular bushing (25) with said front-piece (14) stable, **in that,** at the corresponding ends, the front-piece (14) has elastic fins (22a, 22b) made as separate ends of a rim (19) of the front-piece (14) which acts as a housing seating for a corresponding lens (18) **and in that** said push rod part (26) is positioned, when in use, in an intermediate space (20) between said elastic fins (22a, 22b), preventing them from closing and therefore preventing the removal of the bushing (25) from the front-piece (14).

2. Frame assembly for spectacles as in claim 1, **characterized in that** said push rod part (26) is made on a spacer element (3 8) by means of said easy breaking zone (37), said spacer element (38) being housed in a seating made in said handle part (35) and able to be removed from and inserted into it.

3. Frame assembly for spectacles as in any claim hereinbefore, **characterized in that** said assembling/disassembling tool (27) also comprises a blade element (42) associated to said handle part (35) in a different position from said push rod part (26), configured to allow the removal of said push rod part (26) from its position coupled stably to said end of the front-piece (14).

4. Frame assembly for spectacles as in claim 2 **characterized in that** said elastic fins (22a, 22b) has at the ends respective retaining teeth (23) facing in an opposite direction with respect to each other.

5. Frame assembly for spectacles as in claim 4, **characterized in that** said retaining teeth (23) are separated from each other by an intermediate space (20) which allows to elasticize the rim (19) after the tubular bushing (25) has been removed.

6. Method to assemble frames for spectacles as in claim 1, **characterized in that** it provides to supply a tool (27) having a handle part (35) and an appendix or push rod (26), connected to said handle part (35) or to a spacer element (38) housed in said handle part (35), by means of an easy breaking zone (37), to position said push rod (26) in correspondence to a corresponding end of the front-piece (14), and to bend said handle part (35) in order to determine the breakage of the push rod (26) and to position it in correspondence to said end of the push rod (26), in order to render the coupling between front-piece (14) and tubular bushing (25) stable.

7. Method to disassemble frames for spectacles assembled as in claim 6, **characterized in that** it provides to supply a tool (27) having a blade element (42) associated to said handle part (35) in a different position from the coupling position of said push rod part (26), and to insert said blade element (42) in correspondence to said end of the frames (14) in order to determine the removal of said push rod (26) from it and to allow the removal of the tubular bushing (25) from said front-piece (14).

## Patentansprüche

1. Rahmenanordnung für Brillen, umfassend Rahmen und ein Montage-/Demontagewerkzeug, wobei die Rahmen (10) ein Vorderteil (14), Bügel (13), die mit den entgegengesetzten Enden des Vorderteils (14) gelenkig verbunden sind, und eine röhrenförmige Buchse (25), die auf einrastbare Art und Weise mit dem entsprechenden Ende des Vorderteils (14) verbunden und davon gelöst werden kann, **dadurch gekennzeichnet, dass** das Montage-/Demontagewerkzeug (27) ein Griffteil (35) und ein Schubstangenteil (26) aufweist, welches mit dem Griffteil (35) über einen leicht brechenden Bereich verbunden ist (37), wobei das Schubstangenteil (26) von dem Griffteil (35) abnehmbar ist, um in dem Ende des Vorderteils (14) eingefügt und positioniert zu werden und um die Verbindung der röhrenförmigen Buchse (25) mit dem Vorderteil (14) zu stabilisieren, dadurch, dass das Vorderteil (14) an den entsprechenden Enden elastische Lamellen (22a, 22b) aufweist, die als separate Enden eines Rands (19) des Vorderteils (14) ausgeführt sind, welcher als Gehäusesitz für ein entsprechendes Brillenglas (18) fungiert, und dadurch, dass das Schubstangenteil (26), bei Verwendung, in einem Zwischenraum (20) zwischen den elastischen Lamellen (22a, 22b) positioniert ist, wodurch vermieden wird, dass sie sich schließen und dadurch das Entfernen der Buchse (25) aus dem Vorderteil (14) verhindert wird.

2. Rahmenanordnung für Brillen nach Anspruch 1, **dadurch gekennzeichnet, dass** das Schubstangenteil (26) an einem Abstandselement (38) mittels des leicht brechenden Bereichs (37) angebracht ist, wobei das Abstandselement (28) in einem Sitz aufgenommen ist, der in dem Griffteil (35) ausgeführt ist und daraus entfernt und darin eingesetzt werden kann.

3. Rahmenanordnung für Brillen nach einem der vorstehenden Ansprüche, **dadurch gekennzeichnet, dass** das Montage-/Demontagewerkzeug (27) ebenfalls ein Blattelement (42) aufweist, das mit dem Griffteil (35) in einer anderen Position als das Schubstangenteil (26) verbunden ist, dazu ausgestaltet, um die Entfernung des Schubstangenteils (26) aus seiner Position, in welcher es stabil mit dem Ende des Vorderteils (14) verbunden ist, zu ermöglichen.

4. Rahmenanordnung für Brillen nach Anspruch 2, **dadurch gekennzeichnet, dass** die elastischen Lamellen (22a, 22b) an den Enden entsprechende Rückhaltezähne (23) aufweisen, die in eine zueinander entgegengesetzte Richtung weisen.

5. Rahmenanordnung für Brillen nach Anspruch 4, **dadurch gekennzeichnet, dass** die Rückhaltezähne (23) voneinander getrennt sind durch einen Zwischenraum (20), der es ermöglicht, den Rand (19) elastisch zu machen, nachdem die röhrenförmige Buchse (25) entfernt wurde.

6. Verfahren zum Montieren von Rahmen für Brillen nach Anspruch 1, **dadurch gekennzeichnet, dass** es vorsieht, ein Werkzeug (27) bereitzustellen, das ein Griffteil (35) und ein Ansatzstück oder eine Schubstange (26), die über einen leicht brechenden Bereich (37) mit dem Griffteil (35) oder mit einem Abstandselement (38), das in dem Griffteil (35) eingesetzt ist, verbunden sind, aufweist, die Schubstange (26) in Bezug auf ein entsprechendes Ende des Vorderteils (14) zu positionieren, und das Griffteil (35) zu biegen, um das Brechen der Schubstange (26) zu verursachen und um es in Bezug auf das Ende der Schubstange (26) zu positionieren, um die Verbindung zwischen Vorderteil (14) und röhrenförmiger Buchse (25) zu stabilisieren.

7. Verfahren zum Demontieren von Rahmen für Brillen, die nach Anspruch 6 montiert sind, **dadurch gekennzeichnet, dass** es vorsieht, ein Werkzeug (27) bereitzustellen, das ein Blattelement (42) aufweist, das mit dem Griffteil (35) in einer anderen Position als der Verbindungsposition des Schubstangenteils (26) verbunden ist, und das Blattelement (42) in Bezug auf das Ende der Rahmen (14) einzusetzen, um die Entfernung der Schubstange (26) daraus zu verursachen und um die Entfernung der röhrenförmigen Buchse (25) aus dem Vorderteil (14) zu ermöglichen.

## Revendications

1. Ensemble de montures de lunettes comprenant des montures et un outil d'assemblage/désassemblage, dans lequel lesdites montures (10) comprennent une partie frontale (14), des branches (13) articulées sur les extrémités opposées de la partie frontale (14) et un manchon tubulaire (25) pouvant être associé par encliquetage à l'extrémité correspondante de la partie frontale (14), et pouvant être retiré de celle-ci, **caractérisé en ce que** ledit outil d'assemblage/désassemblage (27) comprend une partie de poignée (35) et une partie de tige de poussée (26) reliée à la partie de poignée (35) par l'intermédiaire d'une zone de rupture facile (37), dans lequel ladite partie de tige de poussée (26) peut être retirée de ladite partie de poignée (35) afin d'être insérée et positionnée dans ladite extrémité de la partie frontale (14) et rendre stable le couplage dudit manchon tubulaire (25) avec ladite partie frontale (14), **en ce que,** au niveau des extrémités correspondantes, la partie frontale (14) dispose d'ailettes élastiques (22a, 22b) constituées en tant qu'extrémités séparées d'un rebord (19) de la partie frontale (14) qui agit en tant que siège de logement pour une lentille correspondante (18) et **en ce que** ladite partie de tige de poussée (26) est positionnée, pendant son utilisation, dans un espace intermédiaire (20) entre lesdites ailettes élastiques (22a, 22b), les empêchant de se fermer et donc empêchant le retrait du manchon (25) de la partie frontale (14).

2. Ensemble de montures de lunettes selon la revendication 1, **caractérisé en ce que** ladite partie de tige de poussée (26) est réalisée sur un élément d'écartement (38) au moyen de ladite zone de rupture facile (37), ledit élément d'écartement (38) étant logé dans un siège réalisé dans ladite partie de poignée (35) et pouvant être retiré de celui-ci et inséré dans celui-ci.

3. Ensemble de montures de lunettes que l'une quelconque des revendications précédentes, **caractérisé en ce que** ledit outil d'assemblage/désassemblage (27) comprend en outre un élément de lame (42) associé à ladite partie de poignée (35) dans une position différente de ladite partie de tige de poussée (26), configuré pour permettre le retrait de ladite partie de tige de poussée (26) de sa position couplée de manière stable à ladite extrémité de la partie frontale. (14).

4. Ensemble de montures de lunettes selon la revendication 2 **caractérisé en ce que** lesdites ailettes élastiques (22a, 22b) ont aux extrémités des dents de retenue respectives (23) positionnées en vis-à-vis les unes par rapport aux autres dans une direction opposée.

5. Ensemble de montures de lunettes selon la revendication 4, **caractérisé en ce que** lesdites dents de retenue (23) sont séparées les unes des autres par un espace intermédiaire (20) qui permet de rendre élastique le rebord (19) une fois que le manchon tubulaire (25) a été retiré.

6. Procédé pour assembler des montures de lunettes selon la revendication 1, **caractérisé en ce que** il prévoit de fournir un outil (27) ayant une partie de poignée (35) et un appendice ou une tige de poussée (26), relié à ladite partie de poignée (35) ou à un élément d'écartement (38) contenu dans ladite partie de poignée (35), par l'intermédiaire d'une zone de rupture facile (37), pour positionner ladite tige de poussée (26) en correspondance avec une extrémité correspondante de la partie frontale (14), et pour plier ladite partie de poignée (35) afin de déterminer la rupture de la tige de poussée (26) et la positionner en correspondance avec ladite extrémité de la tige de poussée (26), afin de rendre stable le couplage entre la partie frontale (14) et le manchon tubulaire (25).

7. Procédé pour désassembler des montures de lunettes assemblées selon la revendication 6, **caractérisé en ce qu**'il prévoit de fournir un outil (27) ayant un élément de lame (42) associé à ladite partie de poignée (35) dans une position différente de la position de couplage de ladite partie de tige de poignée (26), et pour insérer ledit élément de lame (42) en correspondance avec ladite extrémité des montures (14) afin de déterminer le retrait de ladite tige de poussée (26) de celle-ci et de permettre le retrait du manchon tubulaire (25) de ladite partie frontale (14).
